# EUROPEAN PATENT SPECIFICATION

(11) **EP 2 338 933 B1**
(45) Date of publication and mention of the grant of the patent: **20.03.2013**
(21) Application number: 09820603.0
(22) Date of filing: 14.10.2009
(51) Int. Cl.: C08J 9/26, C08K 5/00, C08L 23/08, C08L 27/12, D01F 6/32, C08J 9/28, C08L 27/18

(54) **PROCESS FOR PRODUCING POROUS ETHYLENE/TETRAFLUOROETHYLENE COPOLYMER AND POROUS ETHYLENE/TETRAFLUOROETHYLENE COPOLYMER**
HERSTELLUNGSVERFAHREN FÜR EIN PORÖSES ETHYLEN/TETRAFLUORETHYLEN-COPOLYMER UND PORÖSES ETHYLEN/TETRAFLUORETHYLEN-COPOLYMER
PROCÉDÉ DE PRODUCTION D'UN COPOLYMÈRE D'ÉTHYLÈNE/TÉTRAFLUOROÉTHYLÈNE POREUX ET COPOLYMÈRE D'ÉTHYLÈNE/TÉTRAFLUOROÉTHYLÈNE POREUX

(30) Priority: 16.10.2008 JP 2008266936; 01.07.2009 JP 2009156741
(43) Date of publication of application: 29.06.2011
(73) Proprietor: Asahi Glass Company, Limited, Chiyoda-ku Tokyo 100-8405 (JP)
(72) Inventor: IRUYA, Ken, Tokyo 100-8405 (JP); NAKANO, Takashi, Tokyo 100-8405 (JP); FUJITA, Tomoyuki, Tokyo 100-8405 (JP); MORIZAWA, Yoshitomi, Tokyo 100-8405 (JP)
(74) Representative: Hock, Joachim
(86) International application number: PCT/JP2009/067789
(87) International publication number: WO 2010/044425

(56) References cited:
- EP-A1- 1 236 503
- EP-A2- 0 356 045
- JP-A- 2 196 835
- JP-A- 5 192 988
- JP-A- 61 152 739
- JP-A- 62 106 808
- JP-A- 2005 097 367
- US-A- 4 623 670
- US-A- 4 933 388

## Description

### TECHNICAL FIELD

The present invention relates to a process for producing an ethylene/tetrafluoroethylene copolymer porous material, and an ethylene/tetrafluoroethylene copolymer porous material obtained by the production process.

### BACKGROUND ART

Heretofore, a porous material such as a porous film or a porous hollow fiber, made of a resin such as a polyolefin resin, has been widely used in various fields since it has a desired pore size and is available at a low cost and is light in weight. For example, a precise filtration membrane or separation membrane for separation of fine particles in a cleaning agent or in a gas in a semiconductor production process, aseptic separation of brewed produces, removal of viruses in blood products, dialysis of blood, demineralization of sea water, etc., or a separator for a cell, may be mentioned.

Particularly, a fluororesin porous material is excellent in properties such as chemical resistance, solvent resistance and heat resistance, various studies have been conducted thereon as a filter material, etc. At present, fluororesins in practical use as a porous material are a polytetrafluoroethylene (hereinafter sometimes referred to as PTFE) and a vinylidene fluoride resin (hereinafter sometimes referred to as PVDF).

A highly porous PTFE film having fine pores is prepared in such a manner that a liquid lubricant (an assistant) is mixed with a fine powder of PTFE obtained by emulsion polymerization, the mixture is packed and then extruded into a predetermined shape, and the extruded product is stretched in a long axis direction and formed to have pores, followed by firing. A porous PTFE film is widely used as a filter in a clinical medical field for e.g. sterile filtration in blood component analysis, of a blood serum or an injection, a semiconductor industry field for removal of fine particles in a cleaning water or a cleaning agent for LSI, in a public heath field e.g. for an air pollution test, etc. Further, a porous PTFE film has high water repellency and oil repellency and further its fine pores have properties to pass water vapor but block water droplets, and thus it is widely used as an air permeable waterproof cloth not only in industrial fields but also in a field of common waterproof clothing.

However, a porous material of PTFE is relatively flexible due to its material, and accordingly its creep resistance is not sufficient, and if it is wound, the porous material is deformed and the pores are collapsed, thus leading to a decrease in filtration properties. Further, since PTFE has an extremely high melt viscosity, melt forming such as extrusion or injection molding which is employed for a polyolefin resin is difficult. Accordingly, the form of a PTFE porous material is limited to a film, and its formation into an optional form depending upon the purpose of use, such as formation into a hollow fiber, requires special processing technique.

Further, a porous material made of PVDF has a drawback that it is readily eroded by some chemicals although it is superior in the chemical resistance to a polyolefin resin. Particularly, a porous material made of PVDF has an insufficient alkali resistance, and thus a strongly alkaline chemical cannot be used for cleaning the porous material.

Patent Documents 1, 2 and 3 disclose a process for producing a porous material made of an ethylene/tetrafluoroethylene copolymer (hereinafter sometimes referred to as ETFE). If it is attempted to increase the porosity of an ETFE porous material obtainable by such a process, the mechanical strength tends to be low. Further, in the production process disclosed in Patent Document 3, steps are complicated if an ETFE porous material particularly a highly porous ETFE porous material is to be obtained, and a simpler production process has been required.

### PRIOR ART DOCUMENTS

### PATENT DOCUMENTS

Patent Document 1: JP-B-63-11370
Patent Document 2: Patent No. 3,265,678
Patent Document 3: JP-A-2008-13615

### DISCLOSURE OF INVENTION

### TECHNICAL PROBLEM

It is an object of the present invention to provide a process for easily producing a porous material of an ethylene/tetrafluoroethylene copolymer having excellent chemical resistance and filtration performance and further having a high heat resistance, within a wide range of the porosity, and an ethylene/tetrafluoroethylene copolymer porous material obtainable by such a production process.

### SOLUTION TO PROBLEM

The present invention provides the following process for producing an ethylene/tetrafloroethylene copolymer and ethylene/tetrafluoroethylene copolymer porous material.
[1] A process for producing an ethylene/tetrafluoroethylene copolymer porous material, which comprises a step (A) of dissolving an ethylene/tetrafluoroethylene copolymer having repeating units based on ethylene and repeating units based on tetrafluoroethylene, in a solvent which can dissolve the ethylene/tetrafluoroethylene copolymer, at a temperature of at most 300°C and at least the phase separation temperature of a solution obtainable, to achieve a predetermined concentration to obtain a solution; a step (B) of forming the solution at a temperature of at most 300°C and at least the phase separation temperature of the solution to obtain a formed product; and a step (C) of cooling the formed product at a temperature of at least the phase separation temperature of the solution, to a temperature of at most the phase separation temperature of the solution to solidify the ethylene/tetrafluoroethylene copolymer.
[2] The process for producing an ethylene/tetrafluoroethylene copolymer porous material according to the above [1], wherein the dissolution in the step (A) is carried out at a temperature of at least the phase separation temperature of the solution and at most the melting point of the ethylene/tetrafluoroethylene copolymer.
[3] The process for producing an ethylene/tetrafluoroethylene copolymer porous material according to the above [1] or [2], wherein the predetermined concentration in the step (A) is from 15/85 to 65/35 by the mass ratio of the ethylene/tetrafluoroethylene copolymer to the solvent as represented by the ethylene/tetrafluoroethylene copolymer/the solvent, in the solution.
[4] The process for producing an ethylene/tetrafluoroethylene copolymer porous material according to any one of the above [1] to [3], wherein the cooling in the step (C) is carried out in a cooling liquid.
[5] The process for producing an ethylene/tetrafluoroethylene copolymer porous material according to any one of the above [1] to [4], wherein the solvent is at least one member selected from the group consisting of a fluorinated aromatic compound, an aliphatic compound having at least one carbonyl group and a hydrofluoroalkyl ether.
[6] The process for producing an ethylene/tetrafluoroethylene copolymer porous material according to any one of the above [1] to [5], wherein in the step (A), the solution contains a powder having a primary particle size of from 10 nm to 1 µm.
[7] The process for producing an ethylene/tetrafluoroethylene copolymer porous material according to any one of the above [4] to [6], wherein the step (B) is carried out by discharging the solution as an extruded product.
[8] The process for producing an ethylene/tetrafluoroethylene copolymer porous material according to the above [7], wherein the cooling in the step (C) is carried out by passing the extruded product immediately after the step (B) through a dry portion having a length of from 0.1 to 100 mm at a temperature of at least 0°C and at most the phase separation temperature of the solution, and then introducing the extruded product to the above cooling liquid.
[9] The process for producing an ethylene/tetrafluoroethylene copolymer porous material according to the above [4], [7] or [8], wherein the cooling liquid is a non-solvent for the ethylene/tetrafluoroethylene copolymer.
[10] The process for producing an ethylene/tetrafluoroethylene copolymer porous material according to any one of the above [1] to [9], which further has a step (D) of extracting the solvent.
[11] An ethylene/tetrafluoroethylene copolymer porous material in the form of a film or a hollow fiber, obtained by the production process as defined in any one of the above [1] to [10].
[12] The ethylene/tetrafluoroethylene copolymer porous material according to the above [11], which has a porosity of from 20 to 90% and has an average pore size of the pores of from 0.01 to 20 µm.

### ADVANTAGEOUS EFFECTS OF INVENTION

According to the production process of the present invention, an ethylene/tetrafluoroethylene copolymer porous material having repeating units based on ethylene and repeating units based on tetrafluoroethylene, having excellent chemical resistance and filtration performance, can be obtained within a wide range of the porosity. Further, the obtainable porous material is a porous material in various shapes within a wide range of the porosity, and has excellent separation performance.

### BRIEF DESCRIPTION OF THE DRAWINGS

Fig. 1 is a scanning electron micrograph (100,000 magnifications) of the surface of an ETFE porous film of the present invention obtained in Example 1.
Fig. 2 is a scanning electron micrograph (10,000 magnifications) of the cross section of an ETFE hollow fiber of the present invention obtained in Example 2.
Fig. 3 is a scanning electron micrograph (30,000 magnifications) of the cross section of an ETFE hollow fiber of the present invention obtained in Example 3.
Fig. 4 is a scanning electron micrograph (10,000 magnifications) of the cross section of an ETFE hollow fiber of the present invention obtained in Example 4.
Fig. 5 is a scanning electron micrograph (25,000 magnifications) of the cross section of an ETFE hollow fiber of the present invention obtained in Example 5.
Fig. 6 is a scanning electron micrograph (10,000 magnifications) of the cross section of an ETFE hollow fiber of the present invention obtained in Example 6.

### DESCRIPTION OF EMBODIMENTS

Now, the embodiment of the present invention will be described in detail below.

First, a process for producing a porous material of an ethylene/tetrafluoroethylene copolymer having repeating units based on ethylene and repeating units based on tetrafluoroethylene will be described. Here, as described above, in this specification, an ethylene/tetrafluoroethylene copolymer will sometimes be referred to as "ETFE", and in this specification, "ETFE" is more specifically a term used for an ethylene/tetrafluoroethylene copolymer having repeating units based on ethylene and repeating units based on tetrafluoroethylene.

The production process of the present invention is characterized by comprising a step (A) of dissolving an ETFE having repeating units based on ethylene and repeating units based on tetrafluoroethylene, in a solvent which can dissolve the ETFE at a temperature of at most 300°C, at a temperature of at most 300°C and at least the phase separation temperature of a solution obtainable, to achieve a predetermined concentration to obtain a solution; a step (B) of forming the solution at a temperature of at most 300°C and at least the phase separation temperature of the solution to obtain a formed product; and a step (C) of cooling the formed product at a temperature of at least the phase separation temperature of the solution, to a temperature of at most the phase separation temperature of the solution to solidify the ETFE.

The ETFE in the present invention is not particularly limited so long as it is an ETFE having repeating units based on ethylene and repeating units based on tetrafluoroethylene. Such a fluorocopolymer may, for example, be specifically an ETFE having repeating units based on ethylene and repeating units based on tetrafluoroethylene (hereinafter sometimes referred to as TFE) as main repeating units in the copolymer.

The ETFE in the present invention may be one having a molar ratio of repeating units based on TFE/repeating units based on ethylene of preferably from 70/30 to 30/70, more preferably from 65/35 to 40/60, most preferably from 60/40 to 40/60.

Further, the ETFE in the present invention may have, in addition to the repeating units based on TFE and ethylene, repeating units based on another monomer. Such another monomer may, for example, be a fluoroethylene (excluding TFE) such as CH₂=CFCl or CF₂=CH₂; a fluoropropylene such as CF₂=CFCF₃ or CF₂=CHCF₃; a (polyfluoroalkyl)ethylene having a C₂₋₁₂ fluoroalkyl group such as CF₃CF₂CH=CH₂, CF₃CF₂CF₂CF₂CH=CH₂, CF₃CF₂CF₂CF₂CF=CH₂ or CF₂HCF₂CF₂CF=CH₂; a perfluorovinyl ether such as Rf(OCFXCF₂)mOCF=CF₂ (wherein Rf is a C₁₋₆ perfluoroalkyl group, X is a fluorine atom or a trifluoromethyl group, and m is an integer of from 0 to 5), CF₂=CFCF₂OCF=CF₂ or CF₂=CF(CF)₂OCF=CF₂; a perfluorovinyl ether having a group capable of easily converted to a carboxylic acid group or a sulfonic acid group, such as CH₃OC(=O)CF₂CF₂CF₂OCF=CF₂ or FSO₂CF₂CF_{2O}CF(CF₃)CF₂OCF=CF₂; or an olefin (excluding ethylene) such as a C3 olefin having 3 carbon atoms such as propylene or a C4 olefin having 4 carbon atoms such as butylene or isobutylene. Such a comonomer may be used alone or as a mixture of two or more in combination.

As another monomer which the ETFE of the present invention may have, in addition to the above comonomers, a monomer having a crosslinkable functional group may be mentioned. Such a monomer may, for example, be itaconic anhydride, maleic anhydride, citraconic anhydride or 5-norbornene-2,3-dicarboxylic anhydride.

In a case where the ETFE has repeating units based on such another monomer, the ratio of such repeating units is preferably at most 30 mol%, more preferably from 0.1 to 15 mol%, most preferably from 0.2 to 10 mol%, based on all the repeating units in the ETFE.

The melt index (hereinafter referred to as MI) of the ethylene/tetrafluoroethylene copolymer such as an ETFE of the present invention is from 0.5 to 40 (unit: g/10 min), preferably from 1 to 30. MI is an index of the melt forming property, and when it is high, the molecular weight of the ETFE is low, and when it is low, the molecular weight of the ETFE is high. If MI is too high, the viscosity of a solution will be decreased, whereby the hollow shape is less likely to be maintained, or the strength of a porous material after forming tends to be decreased. Further, if MI is too low, the viscosity of the solution will be too high, and forming property tends to be poor. MI is measured by a method as stipulated in ASTM D3159-98.

In the production process of the present invention, the form of the ETFE when the ETFE is dissolved in a solvent is preferably a powder since such an ETFE can be dissolved in a short time, however an ETFE in the form of pellets or in another form may also be used.

The ETFE in the present invention may be one obtained by copolymerizing ethylene and TFE and another monomer which may optionally be contained by a conventional method The polymerization method may, for example, be solution polymerization, suspension polymerization, emulsion polymerization or bulk polymerization.

As the ETFE in the present invention, a commercially available product may be used. As commercially available products, for example, the ETFE may, for example, be Fluon (trademark) ETFE series and Fluon (trademark) LM series manufactured by Asahi Glass Company, Limited, NEOFLON (trademark) manufactured by Daikin Industries, Dyneon (trademark) ETFE manufactured by Dyneon, or Tefzel (trademark) manufactured by DuPont. Further, the melting point of the ETFE in the present invention is not particularly limited, and in view of the solubility and the strength, it is preferably from 130°C to 275°C, more preferably from 140°C to 265°C, most preferably from 150°C to 260°C.

In the production process of the present invention, such ETFEs may be used alone or as a mixture of two or more.

### <Step (A)>

The step (A) in the production process of the present invention is a step of dissolving the above ETFE in a solvent which can dissolve the ETFE at a temperature of at most 300°C, at a temperature of at most 300°C and at least the phase separation temperature of a solution obtainable, to achieve a predetermined concentration to obtain a solution.

The solvent used in the step (A) in the production process of the present invention is not particularly limited so long as it is a solvent which can dissolve the ETFE at a temperature of at most 300°C, and is preferably a solvent which can dissolve at least 1 mass% of the ETFE based on the amount of the solvent, at a temperature of at most the melting point of the ETFE to be dissolved in the solvent. The amount of the ETFE to be dissolved is more preferably at least 5 mass%, most preferably from 10 to 90 mass%.

Such a solvent is at least one solvent selected from the group consisting of a fluorinated aromatic compound, an aliphatic compound having at least one carbonyl group and a hydrofluoroalkyl ether. Such a solvent is a solvent which cannot dissolve the ETFE at room temperature but can dissolve the ETFE at least at a temperature lower than the melting point of the ETFE to form an ETFE solution having a proper viscosity.

The fluorinated aromatic compound to be used in the present invention preferably has a melting point of at most 230°C, more preferably at most 200°C, further preferably from -50 to 180°C. If the compound has a melting point within such a range, it will be excellent in handling ability when the ETFE is dissolved. Further, the fluorinated aromatic compound has a fluorine content ((fluorine atomic weight × number of fluorine atoms in the molecule)×100/molecular weight) of preferably from 5 to 75 mass%, more preferably from 9 to 75 mass%, furthermore preferably from 12 to 75 mass%. Within such a range, excellent solubility of the ETFE will be obtained.

Such a fluorinated aromatic compound may, for example, be specifically a fluorinated benzonitrile, a fluorinated benzoic acid and its ester, a fluorinated polycyclic aromatic compound, a fluorinated nitrobenzene, a fluorinated phenyl alkyl alcohol, a fluorinated phenol and its ester, a fluorinated aromatic ketone, a fluorinated aromatic ether, a fluorinated aromatic sulfonyl compound, a fluorinated pyridine compound, a fluorinated aromatic carbonate, a perfluoroalkyl-substituted benzene, perfluorobenzene, a polyfluoroalkyl ester of benzoic acid, a polyfluoroalkyl ester of phthalic acid or an aryl ester of trifluoromethanesulfonic acid.

Among them, the fluorinated aromatic compound used as the solvent in the present invention is more preferably at least one member selected from the group consisting of a fluorinated benzonitrile, a fluorinated benzoic acid and its ester, a fluorinated polycyclic aromatic compound, a fluorinated nitrobenzene, a fluorinated phenyl alkyl alcohol, a fluorinated phenol and its ester, a fluorinated aromatic ketone, a fluorinated aromatic ether, a fluorinated aromatic sulfonyl compound, a fluorinated pyridine compound, a fluorinated aromatic carbonate, a perfluoroalkyl-substituted benzene, perfluorobenzene, a polyfluoroalkyl ester of benzoic acid, a perfluoroalkyl ester of phthalic acid, and an aryl ester of trifluoromethanesulfonic acid, more preferably at least one member selected from the group consisting of a fluorinated benzonitrile, a fluorinated benzoic acid and its ester, a fluorinated polycyclic aromatic compound, a fluorinated nitrobenzene, a fluorinated phenyl alkyl alcohol, an ester of a fluorinated phenol, a fluorinated aromatic ketone, a fluorinated aromatic ether, a fluorinated aromatic sulfonyl compound, a fluorinated pyridine compound, a fluorinated aromatic carbonate, a perfluoroalkyl-substituted benzene, perfluorobenzene, a polyfluoroalkyl ester of benzoic acid, a polyfluoroalkyl ester of phthalic acid and an aryl ester of trifluoromethanesulfonic acid, each having at least two fluorine atoms.

Among such fluorinated aromatic compounds, a more preferred compound may, for example, be pentafluorobenzonitrile, 2,3,4,5-tetrafluorobenzonitrile, 2,3,5,6-tetrafluorobenzonitrile, 2,4,5-trifluorobenzonitrile, 2,4,6-trifluorobenzonitrile, 3,4,5-trifluorobenzonitrile, 2,3-difluorobenzonitrile, 2,4-difluorobenzonitrile, 2,5-difluorobenzonitrile, 2,6-difluorobenzonitrile, 3,4-difluorobenzonitrile, 3,5-difluorobenzonitrile, 4-fluorobenzonitrile, 3,5-bis(trifluoromethyl)benzonitrile, 2-(trifluoromethyl)benzonitrile, 3-(trifluoromethyl)benzonitrile, 4-(trifluoromethyl)benzonitrile, 2-(trifluoromethoxy)benzonitrile, 3-(trifluoromethoxy)benzonitrile, 4-(trifluoromethoxy)benzonitrile, (3-cyanophenyl)sulfur pentafluoride, (4-cyanophenyl)sulfur pentafluoride, pentafluorobenzoic acid, ethyl pentafluorobenzoate, methyl 2,4-difluorobenzoate, methyl 3-(trifluoromethyl)benzoate, methyl 4-(trifluoromethyl)benzoate, methyl 3,5-bis(trifluoromethyl)benzoate, perfluorobiphenyl, perfluoronaphthalene, pentafluoronitrobenzene, 2,4-difluoronitrobenzene, (3-nitrophenyl)sulfur pentafluoride, pentafluorobenzyl alcohol, 1-(pentafluorophenyl)ethanol, pentafluorophenyl acetate, pentafluorophenyl propanoate, pentafluorophenyl butanoate, pentafluorophenyl pentanoate, perfluorobenzophenone, 2,3,4,5,6-pentafluorobenzophenone, 2',3',4',5',6'-pentafluoroacetophenone, 3'5'-bis(trifluoromethyl)acetophenone, 3'-(trifluoromethyl)acetophenone, 2,2,2-trifluoroacetophenone, pentafluoroanisole, 3,5-bis(trifluoromethyl)anisole, decafluorodiphenyl ether, 4-bromo-2,2',3,3',4',5,5',6,6'-nonafluorodiphenyl ether, pentafluorophenyl sulfonyl chloride, pentafluoropyridine, 3-cyano-2,5,6-trifluoropyridine, bis(pentafluorophenyl)carbonate, benzotrifluoride, 4-chlorobenzotrifluoride, 1,3-bis(trifluoromethyl)benzene, hexafluorobenzene, 2,2,2-trifluoroethyl benzoate, 2,2,3,3-tetrafluoropropyl benzoate, 2,2,3,3,3-pentafluoropropyl benzoate, 3,3,4,4,5,5,6,6,7,7,8,8,8-tridecafluorooctyl benzoate, bis(2,2,2-trifluoroethyl)phthalate or 4-acetylphenyl trifluoromethanesulfonate.

Further, the aliphatic compound having at least one carbonyl group to be used as the solvent in the production process of the present invention, has a melting point of preferably at most 220°C, more preferably at most 50°C, further preferably from -50 to 20°C. Further, the boiling point of the aliphatic compound having at least one carbonyl group is preferably the same as or higher than the temperature at which the carbonyl group-containing aliphatic compound dissolves the ETFE. However, in the present invention, in a case where the dissolution of the ETFE is carried out under autogenous pressure, a carbonyl group-containing aliphatic compound having a boiling point of at most the dissolution temperature may be applicable. The "autogenous pressure" means a pressure which a mixture of the solvent and the ETFE spontaneously shows in a closed container.

In the present invention, the ETFE and the carbonyl group-containing aliphatic compound are heated to a predetermined temperature in a closed container to be formed into a transparent and uniform solution. The heating temperature is preferably at most the melting point of the ETFE, preferably a temperature lower by at least 30°C than the melting point of the ETFE. Whether the ETFE is dissolved or not depends only on the type of the aliphatic compound used and the temperature, and is independent of the pressure. Accordingly, so long as a mixture of the aliphatic compound and the ETFE reaches a predetermined temperature, the pressure at that time is not particularly limited. The autogenous pressure will be high in a case where an aliphatic compound having a lower boiling point is used, and accordingly the boiling point of the carbonyl group-containing aliphatic compound to be used is preferably at least room temperature, more preferably at least 50°C, most preferably at least 80°C, from the viewpoint of the safety and convenience. Further, the upper limit of the boiling point of the carbonyl group-containing aliphatic compound is not particularly limited, and is preferably at most 220°C from the viewpoint of drying properties for application to formation of a thin film by coating.

The above aliphatic compound having at least one carbonyl group is preferably at least one member selected from the group consisting of ketones such as a C₃₋₁₀ cyclic ketone and a linear ketone, esters such as a linear ester and a monoether monoester such as a glycol, and carbonates. Further, the number of carbonyl group(s) is preferably 1 or 2. The molecular structure of the aliphatic compound having at least one carbonyl group is not particularly limited, and for example, the carbon skeleton may be any of linear, branched and cyclic structures, the compound may have an etheric oxygen atom in the carbon-carbon bond constituting the main chain or the side chain, and a part of hydrogen atoms bonded to the carbon atom may be substituted by a halogen atom such as a fluorine atom. Among them, the carbonyl group-containing aliphatic compound to be used in the present invention is more preferably a cyclic ketone. They may be used alone or in combination of two or more.

Specifically, as more preferred carbonyl group-containing aliphatic compounds in the present invention, the following compounds may be mentioned.

The cyclic ketone may, for example, be cyclopentanone, cyclohexanone, 2-methylcyclohexanone, 3-methylcyclohexanone, 4-ethylcyclohexanone, 2,6-dimethylcyclohexanone, 3,3,5-trimethylcyclohexanone, 4-tert-butylcyclohexanone, cycloheptanone or isophorone.

The linear ketone may, for example, be acetone, methyl ethyl ketone, 2-pentanone, methyl isopropyl ketone, 2-kexanone, methyl isobutyl ketone, 2-heptanone, 2-ocatanone, 2-nonanone, diisobutyl ketone or 2-decanone.

The linear ester may, for example, be ethyl formate, isopentyl formate, methyl acetate, ethyl acetate, butyl acetate, isobutyl acetate, pentyl acetate, isopentyl acetate, hexyl acetate, cyclohexyl acetate, 2-ethylhexyl acetate, ethyl butyrate, butyl butyrate, pentyl butyrate, bis(2,2,2-trifluoroethyl)adipate, methyl cyclohexanecarboxylate, 2,2,2-trifluoroethyl cyclohexanecarboxylate or ethyl perfluoropentanoate.

The monoether monoester of a glycol may, for example, be 2-methoxyethyl acetate, 2-ethoxyethyl acetate, 2-butoxyethyl acetate, 1-methoxy-2-acetoxypropane, 1-ethoxy-2-acetoxypropane, 3-methoxybutyl acetate or 3-methoxy-3-methylbutyl acetate.

The carbonate may, for example, be bis(2,2,3,3-tetrafluoropropyl)carbonate, bis(2,2,2-trifluoroethyl)carbonate, diethyl carbonate or propylene carbonate.

The hydrofluoroalkyl ether to be used as the solvent in the production process of the present invention may, for example, be specifically 1,1,1,2,3,3-hexafluoro-4-(1,1,2,3,3,3-hexafluoropropxy)pentane or 1,1,1,2,2,3,4,5,5,5-decafluoro-3-methoxy-4-(trifluoromethyl)pentane. Among them, the hydrofluoroalkyl ether to be used in the present invention is preferably 1,1,1,2,3,3-hexafluoro-4-(1,1,2,3,3,3-hexafluoropropoxy)pentane.

The above solvents may be used alone or in combination of two or more. When two or more are used, the rate of phase separation can sometimes be controlled.

In the present invention, a solvent which does not dissolve nor swell the ETFE up to the melting point of the ETFE or the boiling point of a liquid is defined as a non-solvent. In the production process of the present invention, a non-solvent may be contained in the ETFE solution within a range not to impair the solubility of the ETFE.

The non-solvent for the ETFE may, for example, be specifically an aromatic compound containing no fluorine atom or an alcohol. Among them, in the production process of the present invention, preferably an aromatic compound containing no fluorine atom, such as benzonitrile, acetophenone, nitrobenzene or methyl benzoate is used. Further, in the production process of the present invention, in a case where the ETFE solution contains a non-solvent together with the solvent capable of dissolving the ETFE by itself, the ratio (mass ratio) of the solvent capable of dissolving the ETFE by itself/the non-solvent is preferably from 9/1 to 1/9, more preferably from 7/3 to 3/7.

In the production process of the present invention, in a case where the ETFE solution contains the non-solvent in combination with the solvent capable of dissolving the ETFE by itself, the mixture of the solvent capable of dissolving the ETFE by itself with the non-solvent will be referred to as a "solvent".

In the production process of the present invention, the concentration of the ETFE solution prepared in the step (A) is, as represented by the mass ratio of the ETFE to the solvent as represented by "ETFE/solvent" in the ETFE solution, is preferably from 15/85 to 65/35, more preferably from 20/80 to 60/40, most preferably from 25/75 to 55/45.

When the mass ratio of the ETFE to the solvent in the ETFE solution is within such a range, a hollow fiber having high strength and elongation properties are likely to be obtained. On the other hand, if the content of the ETFE in the ETFE solution is too high, the porosity of a hollow fiber produced will be low, and the water permeability is sometimes decreased.

The viscosity of the ETFE solution within a temperature range of at most 300°C and at least the phase separation temperature of the ETFE solution is preferably from 1 to 10,000 Pa·s, more preferably from 5 to 5,000 Pa·s, most preferably from 10 to 1,000 Pa·s.

The viscosity of the ETFE solution is a value of the viscosity measured by using a melt fluidity measuring apparatus "Capirograph" having a barrel inner diameter of 9.55 mm manufactured by Toyo Seiki Seisaku-sho, Ltd., having an orifice of a diameter of 1 mm and a length of 10 mm set, and extruding the ETFE solution at the above temperature of at most 300°C and at least the phase separation temperature at a piston speed of 10 mm/min. When the viscosity of the ETFE solution is within such a range, formation of the ETFE solution into the shape of e.g. a hollow fiber in the next step (B) will be easy.

Further, in the production process of the present invention, it is also preferred that the ETFE solution prepared in this step (A) contains a powder having a primary particle size of from 10 nm to 1 µm. The powder may be either an organic powder or an inorganic powder so long as it is a powder which can be dissolved and removed by a removing solvent from a solidified product of the ETFE obtained in the step (C), and in the present invention, an inorganic powder is preferably employed.

When the ETFE solution contains such a powder, the ETFE porous material obtainable in the production process of the present invention tends to have a porous structure having a uniform pore size. Further, by dissolving and removing the powder by a removing solvent, it is possible to increase the porosity of the obtainable ETFE porous material. Further, by adding such a powder, the ETFE solution obtainable in the step (A) has a proper viscosity, and thus the ETFE solution is easily formed into the form of e.g. a hollow fiber in the next step (B). The primary particle size of the powder is more preferably from 10 nm to 0.5 µm, further preferably from 30 nm to 0.3 µm.

As the above powder, any conventional one may be used without particular limitation. It may, for example, be specifically an inorganic powder of e.g. anhydrous silica, talc, clay, kaolin, mica, zeolite, calcium carbonate, barium carbonate, magnesium carbonate, calcium sulfate, barium sulfate, magnesium sulfate, zinc oxide, calcium oxide, magnesium oxide, titanium oxide, aluminum hydroxide, magnesium hydroxide or calcium phosphate. Among them, anhydrous silica is preferred with a view to having good dispersibility in the ETFE and being removed with an alkali.

The content of the powder in the ETFE solution is not particularly limited so long as it is within a range not to impair the solubility of the ETFE and the forming properties of the ETFE solution. The content of the powder is preferably at most 50 parts by mass, more preferably from 0 to 30 mass% to 100 parts by mass of the total amount of the ETFE and the solvent. If the content of the powder is too high, the viscosity of the ETFE solution will be high, and such is unfavorable for formation into the form of a film.

The removal solvent to be used to remove the powder from the solidified product of the ETFE after the step (C) or in parallel with the step (C), is not particularly limited so long as it dissolves the powder but does not dissolve the ETFE. In a case where the powder is soluble in an acid, hydrochloric acid or sulfuric acid is used, and in a case where the powder is soluble in an alkali, an alkaline aqueous solution such as sodium hydroxide or potassium hydroxide is used.

The ETFE solution in the present invention is obtained in the step (A) of dissolving the ETFE in the above solvent at a temperature of at most 300°C to achieve a predetermined concentration. The lower limit of the temperature in preparation of the solution in the step (A) is the phase separation temperature of a solution obtainable at the predetermined concentration. As described hereinafter, a mixture containing at least two compounds, or the ETFE and the solvent in this case, is separated into two phases and is not in a uniform solution state, at a temperature of at most the phase separation temperature. That is, preparation of a solution is possible only at a temperature of at least the phase separation temperature. Further, the temperature of the obtainable ETFE solution is at most 300°C and at least the phase separation temperature of the solution.

The temperature at which the ETFE is dissolved in the solvent, that is, the dissolution temperature, varies depending upon the type of the solvent and the composition of the solution, and is preferably optimized by a phase diagram in which the temperature is plotted on a vertical axis and the concentration ratio of the ETFE to the solvent on a horizontal axis, showing the concentrations of two phase coexistence of the ETFE and the solvent at the respective temperatures. In the production process of the present invention, if the temperature at which the ETFE is dissolved in the solvent is too high, the ETFE will undergo heat deterioration and in addition, the solvent will volatilize or undergo heat deterioration. Further, if the temperature is lower than the phase separation temperature of the solution, the ETFE will not be dissolved in the solvent. The temperature at which the ETFE is dissolved in the solvent in the step (A) is preferably a temperature higher by from 5°C to 100°C than the phase separation temperature of a solution to be prepared, more preferably a temperature higher by from 20°C to 50°C than the phase separation temperature. Further, the upper limit of the dissolution temperature in the production process of the present invention is 300°C, and is preferably at most the melting point of the ETFE to be dissolved from the viewpoint of crystallizability of the resin and the volatility of the solvent.

In the step (A) of the present invention, when the ETFE is dissolved in the solvent, conditions other than the temperature are not particularly limited, and the dissolution is preferably carried out usually under normal pressure. However, depending on the type of the ETFE or the solvent to be used, in a case where the boiling point of the solvent is lower than the dissolution temperature or in other cases, dissolution may be carried out in a pressure resistant container under pressure, for example, under a pressure at a level of from 0.01 to 1 MPa. The dissolution time is influenced e.g. by the type of the ETFE or the solvent to be used, the state of the ETFE, or the concentration of the ETFE solution to be prepared.

Here, the phase separation temperature is also called the cloud point. If a solution at a certain concentration is maintained at a temperature higher than the cloud point, the solute (the ETFE in the present invention) and the solvent are in the form of a solution in a uniform one phase, and at the cloud point or below, the solution undergoes phase separation. In general, when the ETFE solution is in a temperature state of at most the phase separation temperature, the solution is separated into two phases of a phase containing the solvent and containing concentrated ETFE, and a phase containing the ETFE and containing the concentrated solvent. Further, at a temperature of at most the crystallization temperature of the ETFE to be used, in the phase containing the concentrated ETFE, the ETFE is solidified, and a precursor of the porous material is formed. The rate of heat transfer in the ETFE solution is considered to be higher by at least 100 times than the rate of diffusion of the solvent/the non-solvent, and when the cooling temperature is set to be sufficiently lower than the crystallization temperature, at a thickness of the porous material usually subjected of from 10 µm to 1 mm, phase separation and solidification occur in the entire ETFE substantially instantaneously after the start of cooling the ETFE solution.

For dissolution of the ETFE in the solvent in the step (A), any stirring apparatus used for preparation of a conventional solution may be used without any limitation. In order to dissolve the ETFE in a shorter time to obtain a uniform solution, it is necessary to well stir the solvent and the ETFE, and an optionally added component such as a powder. Such a stirring apparatus may, for example, be specifically, a pressure container with a batch kneading apparatus or stirring apparatus such as a homomixer, a Henschel mixer, a Banbury mixer or a pressure kneader, or an apparatus having both functions of kneading and extrusion, such as an extruder or a kneader. In the case of dissolution under pressure, the above pressure resistant container with a stirring apparatus, for example, an apparatus such as an autoclave with a stirrer, is used, and as the shape of a stirring blade, a marine propeller blade, a paddle blade, an anchor blade or a turbine blade is used.

In the process for producing an ETFE porous material of the present invention, after the ETFE is dissolved in the solvent until the step (C) via the following step (B), the ETFE solution is maintained at a temperature of at most 300°C and at least the phase separation temperature of the ETFE solution. Considering this, it is advantageous to continuously carry out preparation of the ETFE solution and formation of the ETFE solution by using an apparatus having both functions of kneading and extrusion, such as a single screw or twin screw extruder or a kneader, among the above apparatus.

The temperature at which the ETFE solution is maintained may be the same as or different from the temperature at the time of preparation of the solution i.e. at the time of dissolution, so long as it is a temperature of at most 300°C and at least the phase separation temperature of the solution.

In a case where the apparatus having both functions of kneading and extrusion, for example, a single screw or twin screw extruder is used, the ETFE and the solvent and an optionally added component such as a powder are quantitatively supplied respectively from separate feeders to the single screw or twin screw extruder and kneaded in the extruder to prepare the ETFE solution. The optional component such as a powder may be added by preliminarily mixing it with the solvent or the ETFE.

### <Step (B)>

The step (B) is a step of forming the ETFE solution obtained in the above step (A) at a temperature of at most 300°C and at least the phase separation temperature of the solution to obtain a formed product.

In the step (B) in the production process of the present invention, a method commonly employed to form a solution may be used without any limitation as a method of forming the ETFE solution. Such a method of forming the ETFE solution may, for example, be specifically a method of using an extrusion means such as a single screw or twin screw extruder and discharging the ETFE solution from a exhaust port to form the ETFE solution into the form of a hollow fiber or a film by extrusion, or a common coating film formation method of e.g. coating or spraying the surface of a substrate with the ETFE solution to form the ETFE solution into a film.

In the production process of the present invention, as a means of forming the ETFE solution in the step (B), extrusion is preferably employed, not a batch system, from the viewpoint of continuous forming. In a case where the ETFE solution is formed into a hollow fiber by employing extrusion as a forming means, it is possible to use, as a cap of the exhaust port, e.g. a double pipe cap or a triple pipe cap for spinning a hollow fiber. Further, in a case where the ETFE solution is formed into a flat membrane, a slit-shape cap may be used.

In the step (B), the temperature for forming the ETFE solution, specifically, the temperature of the cap of the exhaust port in the case of extrusion, the temperature of the coating liquid in the coating film formation method, is within a range of from the phase separation temperature of the ETFE solution to be used to 300°C, in the same manner as the dissolution temperature in preparation of the ETFE solution in the step (A), preferably within a range of from the phase separation temperature of the solution to the melting point of the ETFE. The forming temperature may be the same as or different from the dissolution temperature, however, the dissolution temperature is preferably set to a temperature higher than the forming temperature, with a view to uniformly conducting dissolution in a short time.

In the step (B), in a case where the ETFE solution is extruded into the form of a hollow fiber by using a double pipe cap, simultaneously with extruding the ETFE solution from an outer cyclic portion, a gas or a liquid as a hollow forming material is extruded from an inner cyclic portion. In a case where a triple pipe cap is used, simultaneously with extruding the ETFE solution from an intermediate cyclic portion, a gas or a liquid as a hollow forming material is extruded from an inner cyclic portion, and a gas or a liquid is similarly extruded also from an outer cyclic portion, to suppress volatilization of the solvent from the surface of a hollow fiber. By such operation, it is expected that phase separation is conducted at an early stage, and formation of a dense layer on the outer surface of the hollow fiber is suppressed.

In the production process of the present invention, a formed product of the ETFE solution formed as mentioned above within a temperature range of from the phase separation temperature of the ETFE solution to 300°C is cooled to a temperature of at most the phase separation temperature in the following step (C).

### <Step (C)>

The step (C) in the process for producing a porous material of the ETFE of the present invention is a step of cooling the ETFE solution formed product at a temperature of at least the phase separation temperature obtained in the step (B) to a temperature of at most the phase separation temperature of the solution to solidify the ETFE. The cooling temperature of the ETFE solution formed product is not particularly limited so long as it is at most the phase separation temperature of the ETFE solution to be cooled, and is preferably a temperature lower by at least 20°C than the phase separation temperature of the ETFE solution, more preferably a temperature lower by at least 50°C than the phase separation temperature. Further, the lower limit of the cooling temperature of the ETFE solution formed product is not particularly limited, and is preferably -10°C, more preferably 0°C from the viewpoint of handling efficiency of a cooling medium.

In the production process of the present invention, by the operation of cooling for solidification in the step (C), the ETFE forms a spherical structure or a network structure and in addition, such structures are connected to form an ETFE porous material having a structure with spaces among such structures.

In the step (C), as a cooling medium, a gas may be used, or a liquid may be used. They may be used in combination, for example, in such a manner that a gas and a liquid are used on the inside and the outside of the hollow fiber. A cooling gas is not particularly limited so long as it is a gas not reactive with the ETFE and the solvent at the cooling temperature, and the air or a nitrogen gas may be preferably used. A cooling liquid is not particularly limited so long as it is a liquid not reactive with the ETFE and the solvent at the cooling temperature, and in a case where the ETFE solution formed product immediately after forming in the step (B) is cooled, preferred is a liquid which has a boiling point higher than the temperature of the ETFE solution formed product and which does not dissolve the ETFE at the temperature. Such a cooling liquid may, for example, be specifically 2,6-difluorobenzonitrile, isophorone, silicon oil or hydrogen, and is preferably silicon oil.

In a case where extrusion is employed as a forming means in the step (B), a cooling method in the step (C) may, specifically, be a method of directly introducing the ETFE solution discharged from the exhaust port and formed into a hollow fiber or a film, to a cooling bath filled with a cooling liquid, thereby to carry out cooling. Such a cooling method is preferred, since it is possible to suppress volatilization of the solvent from the outer surface of the ETFE solution formed product to increase the ETFE concentration thereby to form a dense layer on the outer surface of a porous material to be finally obtained. In the present invention, even in a case where a forming method other than the above extrusion is employed, it is similarly preferred to introduce the ETFE solution formed product immediately after formation to the cooling liquid so as to suppress formation of a dense layer on the outer surface of the porous material.

In such a case, for the ETFE solution in the form of a hollow fiber extruded by using the above double pipe circular cap, the cooling medium for formation of hollow part may be a liquid which is the same as or different from the cooling liquid used for the above cooling bath, or may be a gas such as the air or a nitrogen gas. Such a cooling medium is not particularly limited and may properly be selected depending upon e.g. aimed properties of a hollow fiber, however, it is preferred from the viewpoint of the production steps that the solvent in the ETFE solution, the cooling liquid to be used for the cooling bath and the cooling medium for formation of a hollow part are the same type, since such is highly convenient e.g. in recovery of the solvent in the production process. The same applies to the solvent in the ETFE solution, the cooling medium for formation of a hollow part extruded from the inner circular portion and the cooling medium extruded from the outer circular portion in the case of cooling the ETFE solution in the form of a hollow fiber extruded by using the triple pipe circular cap.

Further, in this case also, the cooling liquid is preferably a liquid which has a boiling point higher than the forming temperature of the ETFE solution formed product, i.e. the temperature of the cap in this case, and which does not dissolve the ETFE in the vicinity of that temperature. Depending upon the structure of the extruder to be used, it is sometimes possible to use a cooling liquid having a boiling point lower than the temperature of the ETFE solution formed product, and it is possible to properly select the cooling liquid depending on the structure of the extruder to be used.

Further, in the step (C) of the production process of the present invention, it is possible to employ a cooling method in which immediately after the step (B), the ETFE solution formed product is passed through a dry portion (also called air travel portion or air gap) at a temperature of at least 0°C and at most the phase separation temperature of the solution and then introduced to a cooling bath filled with a cooling liquid, to cool the ETFE solution formed product to at most the phase separation temperature thereby to solidify the ETFE. The length of the dry portion is preferably from 0.1 to 100 mm, more preferably from 0.1 to 50 mm, most preferably from 0.1 to 30 mm. Further, the transit time through the dry portion varies depending on the shape and the size of the ETFE solution formed product and is preferably from 0.1 to 10 seconds, more preferably from 0.1 to 5 seconds, most preferably from 0.1 to 2 seconds. The transit time through the dry portion of the ETFE solution formed product extruded by using e.g. an extruder can be adjusted by controlling the extrusion rate of the apparatus and the winding rate.

As described above, by providing the dry portion (air travel portion) within the above range, it is expected that a dense layer is properly formed on the outer surface of the ETFE solution formed product, thus improving the fouling resistance, such being preferred depending upon the purpose of use of the ETFE porous material to be obtained, for example, in a case where it is used for e.g. treatment with a chemical agent. If the dry portion is longer than 100 mm, the solvent will be volatilized more than necessary from the outer surface of the ETFE solution formed product, thus increasing the ETFE concentration, whereby an excess dense layer will be formed on the outer surface of a porous material to be finally obtained. In order to adjust the degree of formation of the dense layer, it is possible to device to keep the atmosphere in the air travel portion at certain temperature and humidity. For example, a certain amount of an air having its temperature and humidity controlled may be sent, or a space between the spinning cap and the cooling bath is enclosed so that the discharged ETFE solution will not directly in contact with the outside air. The temperature of such a dry portion is not particularly limited so long as it is at most the phase separation temperature of the ETFE solution to be cooled.

Further, in a case where the dry portion is provided, the cooling liquid to be used for the cooling bath is not particularly limited, and water, ethanol, acetone or hexane is preferably used. Among them, water is particularly preferred.

In the process for producing the ETFE porous material of the present invention, the ETFE porous material is produced by carrying out the above steps (A), (B) and (C) in order. In the step (C), the ETFE solidified product solidified in the cooling medium in the cooling bath is an ETFE porous material having such a structure that the ETFE forms a spherical structure or a network structure, and such structures are connected to have a space therebetween.

The ETFE porous material obtained by solidification in the cooling medium in the step (C) is in a state where it contains a solvent which underwent phase separation from the ETFE solution in its space. This solvent may be extracted in the cooling bath in the step (C) or may be extracted in an extraction step (D) separately provided. In view of simplicity, it is preferred that cooling and extraction are carried out in parallel in the cooling bath in the step (C).

For extraction of the solvent in the space of the ETFE porous material, it is preferred to use a higher alcohol, acetone or the non-solvent for the ETFE described for the above step (A), which is a solvent miscible with the solvent dissolving the ETFE, in which the solubility of the ETFE is low, by itself or as a mixed solvent. Among them, it is more preferred to use the non-solvent for the ETFE as the extraction solvent. Accordingly, in a case where cooling and extraction are carried out in parallel in the cooling bath in the above step (C), it is preferred to use the non-solvent for the ETFE as the cooling liquid. The extraction method is preferably a method of adjusting the extraction medium to a temperature at a level of from 50 to 90°C and dipping the solidified ETFE porous material in the medium. Further, the extraction of the solvent may be carried out, even in a case where the after-mentioned stretch is carried out, either during the stretch or before or after the stretch.

Further, in a case where the above obtained ETFE porous material contains a powder, extraction of such a powder is carried out as the case requires.

The removal solvent is not particularly limited so long as it dissolves the powder and does not dissolve the ETFE. In a case where the powder is soluble in an acid, hydrochloric acid or sulfuric acid is used, and in a case where the powder is soluble in an alkali, an alkaline aqueous solution such as sodium hydroxide or potassium hydroxide is used. Extraction of the powder is carried out, for example, after the step of extracting the ETFE dissolution solvent, by dipping the ETFE porous material containing the powder in a removal medium which dissolves the powder under properly selected temperature and time conditions. After the removal of the powder from the ETFE porous material, washing with water and drying may be carried out as the case requires.

In the present invention, in order to increase the pore size of the ETFE porous material or to increase the porosity, a step of further stretching the above obtained ETFE porous material by a known method may be provided. In a case where the ETFE porous material is stretched, for example, at a temperature at a level of from 80 to 130°C, a part of the spherical structure and the aggregate of ETFE molecules connecting the spherical structures are homogenously stretched to form a large number of fine slender pores. The obtained stretched porous material has improved water permeability while maintaining the strength and elongation properties.

In the present invention, by the process for producing an ETFE porous material of the present invention comprising the above steps (A) to (C) or (A) to (D), the ETFE porous material of the present invention can be obtained. Such an ETFE porous material of the present invention can be formed into a shape possible in the production process of the present invention, for example, an optional shape such as a hollow fiber, a tube, a sheet or a film, as described above.

In the ETFE porous material of the present invention, the porosity is preferably from 20 to 90%, and the average pore size of the fine pores is preferably from 0.01 to 20 µm.

The porosity is more preferably from 40 to 85%, most preferably from 60 to 80%. When the porosity is within such a range, the porous material has high strength and has high material permeability such as water permeability.

The porosity is preferably controlled also by the ETFE content in the ETFE solution used in the production process of the present invention. The ETFE content is decreased when a high porosity is to be obtained, and the content is increased when a low porosity is to be obtained.

The average pore size of the fine pores in the ETFE porous material is more preferably from 0.01 to 10 µm, most preferably from 0.01 to 5 µm. When the average pore size is within such a range, high water permeability and separation performance can be obtained, for example, when the porous material is used for removal of turbidity of removal of microorganisms.

In the ETFE porous material of the present invention, it is particularly preferred that the porosity is from 40 to 85%, and the average pore size of the fine pores is from 0.01 to 5 µm.

The average pore size of fine pores in the porous material employed in this specification means an average pore size of through-holes of a porous material measured based on the bubble point method specified in JIS K3832. The average pore size can be easily measured by using a common measuring apparatus such as Perm Porometer manufactured by Porous Materials, Inc.

The average pore size can be adjusted e.g. by the cooling rate of the ETFE solution formed product and the type of the cooling medium used for cooling. When a large average pore size is to be obtained, the cooling rate is made high, and a medium having a large heat capacity is used for the cooling bath. Further, when a small average pore size is to be obtained, the cooling rate is made low, and a medium having a small heat capacity is used for the cooling bath.

When production of an ETFE porous material is carried out by the above thermotropic phase separation method according to the production process of the present invention, it is possible to obtain a porous material, the pore size of pores of which is easily controlled and which has a narrow pore size distribution, in various shapes with a high porosity, as compared with another conventional method such as a stretch method. Further, the ETFE porous material obtained by the production process of the present invention, which has such a homogeneous porous structure, is expected to have a high strength in view of mechanical strength like a resin porous material obtainable by a common phase separation method.

### EXAMPLES

Now, the present invention will be described with reference to Examples. However, it should be understood that the present invention is not limited to such specific Examples.

The melt index MI of an ETFE and the pore size distribution and the average pore size of a fluorocopolymer porous material were measured by the following methods.

### (Melt index (MI))

The melt index (MI) of an ETFE was measured by using Melt Indexer (manufactured by Takara Kogyo K.K.) at 297°C in accordance with ASTM D3159-98.

### (Average pore size, pore size distribution)

The average pore size and the pore size distribution of the fine pores in the ETFE porous material were measured by using a pore size distribution measuring apparatus (Perm Porometer manufactured by Porous Materials, Inc.) by the bubble point method in accordance with ASTM F316-86 and JIS K3832. EXAMPLE 1 (Preparation of ETFE porous film by thermotropic phase separation)

An ETFE porous material in the form of a film was prepared by using an ETFE solution by the following method.

In a glass separable flask, 30 g of ETFE (manufactured by Asahi Glass Company, Limited, Fluon (trademark) LM-720AP, melting point: 225°C, melt index: 18.7 (297°C), hereinafter referred to as "ETFE1") and 170 g of 2,6-difluorobenzonitrile were heated to 185°C with stirring to obtain a uniform solution (concentration of ETFE1: 15 mass%). In this solution, a 4 cm square glass plate was dipped and then drawn up to coat the glass plate with the solution. The glass plate after drawing was rapidly cooled in a water bath. The obtained glass plate coated with the ETFE1 solution was dipped in acetone for 12 hours to sufficiently elute and clean off the solvent (2,6-difluorobenzonitrile), and dried at room temperature for 1 hour under reduced pressure. Then, a coating film was separated from the glass plate to obtain a film (thickness: 300 µm) of ETFE1.

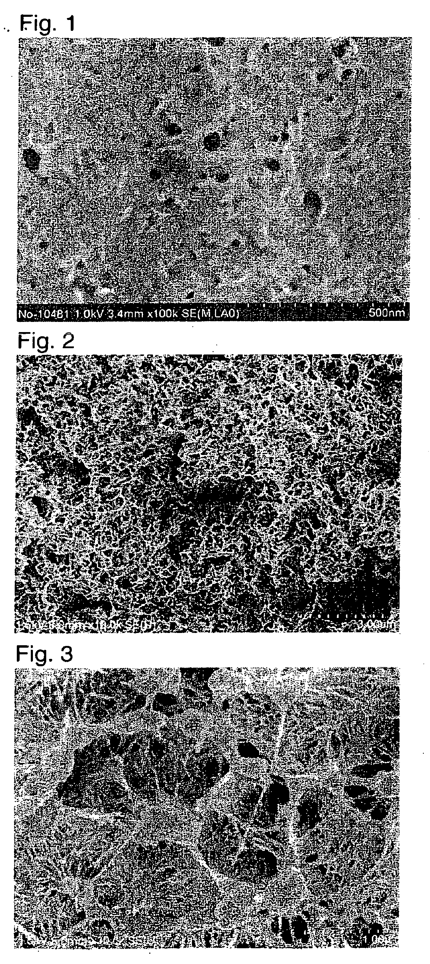

The above obtained film of ETFE1 was confirmed to have a porous structure by observation by a scanning electron microscope. Fig. 1 is shown a scanning electron micrograph of the surface of the obtained ETFE1 film with 100,000 magnifications. The pore size of the ETFE1 porous film was distributed from 0.06 to 2.0 µm, and the average pore size was 1.5 µm. Further, the porosity of the ETFE1 porous film was estimated to be 85% by a method of calculating the volume fraction from the amounts of the resin and the solvent added and the specific gravity.

### EXAMPLE 2 (Preparation of ETFE porous hollow fiber by thermotropic phase separation)

A uniform and transparent 2,6-difluorobenzonitrile solution (concentration of ETFE1: 30 mass%) of ETFE1 prepared at a temperature of 200°C was cooled and solidified. The obtained ETFE1 formed product was pulverized and extruded by using a capillarity flow tester (manufactured by Toyo Seiki Seisaku-sho, Ltd.) equipped with a hollow fiber-form capillary at 180°C into a hollow fiber (inner diameter: 2 mm, outer diameter: 3 mm) and rapidly cooled by air cooling. The obtained hollow fiber was dipped in acetone for 24 hours to extract the solvent (2,6-difluorobenzonitrile) and then dried.

The obtained hollow fiber was freeze-fractured in liquid nitrogen, and its cross section was observed by a spinning electron microscope to confirm that the hollow fiber had a porous structure. In Fig. 2 is shown a scanning electron micrograph of the cross section of the obtained ETFE1 hollow fiber with 10,000 magnifications. The pore size of the porous hollow fiber of ETFE1 was distributed from 0.06 to 0.086 µm, and the average pore size was 0.07 µm. Further, the porosity of the ETFE1 porous hollow fiber was 72%.

### EXAMPLE 3 (Preparation of ETFE porous hollow fiber by thermotropic phase separation)

An ETFE porous hollow fiber was produced by using a combined kneading extruder IMC-1973 (manufactured by IMOTO MACHINERY CO., LTD.) having a double pipe cap for extruding a hollow fiber. First, into the combined kneading extruder, 150 g of ETFE1 and 150 g of 2,6-difluorobenzonitrile were charged and mixed at a temperature of 200°C to prepare an ETFE1 solution (concentration of ETFE1: 50 mass%). Then, the ETFE1 solution was extruded into the form of a hollow fiber in the air at room temperature from the double pipe cap having its temperature set at 200°C, and while the interior of the hollow fiber was cooled with the air, the hollow fiber was transported to a water bath for cooling at 20°C and dipped in the water bath for cooling and solidified to obtain a formed product in the form of a hollow fiber. Here, the distance for cooling from the cap to the water bath for cooling, that is, the air gap was 10 mm. The obtained formed product in the form of a hollow fiber was dipped in acetone at 60°C in a pressure resistant container at 60°C for 1 hour to extract the solvent (2,6-difluorobenzonitrile) and then dried.

The obtained hollow fiber was freeze-fractured in liquid nitrogen, and its cross section was observed by a scanning electron microscope to confirm that the hollow fiber had a porous structure. In Fig. 3 is shown a scanning electron micrograph of the cross section of the obtained ETFE1 hollow fiber with 30,000 magnifications. The pore size of the porous hollow fiber of ETFE1 was distributed from 0.04 to 0.1 µm, and the average pore size was 0.06 µm. Further, the porosity of the ETFE1 porous hollow fiber was 56%.

### EXAMPLE 4 (Preparation of ETFE porous hollow fiber by thermotropic phase separation)

A hollow fiber of ETFE1 was formed in the same manner as in Example 3 except that the distance from the cap of the combined kneading extruder to the water bath for cooling, i.e. the air gap was changed to 50 mm.

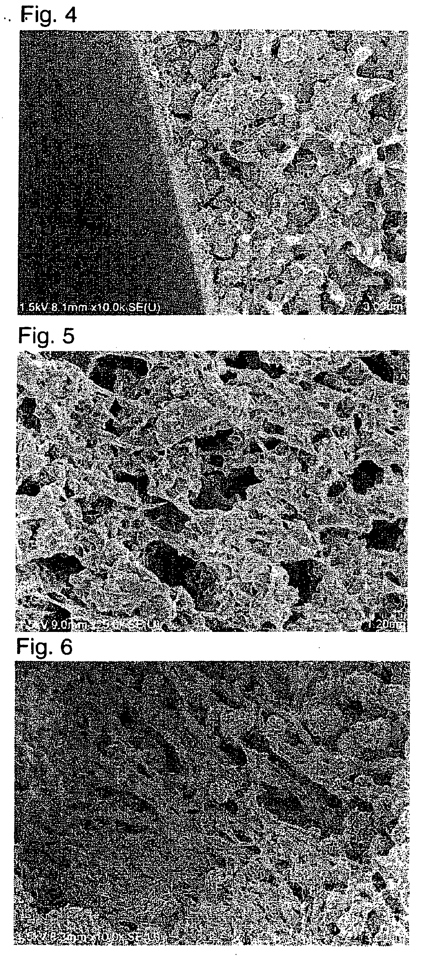

The obtained hollow fiber was freeze-fractured in liquid nitrogen, and the cross section was observed by a scanning electron microscope, whereupon a porous structure and development of spherulites on the surface were confirmed. In Fig. 4 is shown a scanning electron micrograph of the cross section of the obtained ETFE1 hollow fiber with 10,000 magnifications. The pore size of the porous hollow fiber of ETFE1 was distributed from 0.04 to 0.06 µm, and the average pore size was 0.043 µm. Further, the porosity of the ETFE1 porous hollow fiber was 52%.

### EXAMPLE 5 (Preparation of ETFE porous hollow fiber by thermotropic phase separation)

Using the combined kneading extruder used in Example 3, 120 g of ETFE1 and 180 g of isophorone were mixed at a temperature of 190°C to prepare an ETFE solution. Then, a hollow fiber of ETFE1 was formed in the same manner as in Example 3 except that the temperature of the double pipe cap of the combined kneading extruder was changed to 180°C and the distance from the cap of the extruder to the cooling bath i.e. the air gap to 20 mm.

The obtained hollow fiber was freeze-fractured in liquid nitrogen and its cross section was observed by a scanning electron microscope, whereupon it was confirmed that a porous structure was developed. In Fig. 5 is shown a scanning electron micrograph of the cross section of the obtained ETFE1 hollow fiber with 25,000 magnifications. The pore size of the porous hollow fiber of ETFE1 was distributed from 0.04 to 0.06 µm, and the average pore size was 0.057 µm. Further, the porosity of the ETFE1 porous hollow fiber was 68%.

### EXAMPLE 6 (Preparation of ETFE porous hollow fiber by thermotropic phase separation)

Formation of a hollow fiber was carried out by using, as the ETFE, an ETFE having a copolymer composition comprising repeating units based on TFE/repeating units based on ethylene/repeating units based on hexafluoropropylene/repeating units based on CH₂=CH(CF₂)₄F/repeating units based on itaconic anhydride=48.1/42.7/8.2/0.8/0.2 (mol%) (melting point: 190°C, melt index: 149 (297°C), hereinafter referred to as "ETFE2").

Using the combined kneading extrude used in Example 3, 90 g of ETFE2 and 270 g of 2,6-difluorobenzonitrile were mixed at a temperature of 145°C to prepare a solution of ETFE2. Then, a hollow fiber of ETFE2 was formed in the same manner as in Example 3 except that the temperature of the double pipe cap of the combined kneading extruder was changed to 145°C, the cooling medium for the interior of the hollow fiber was changed to water at 50°C, and the distance from the cap of the extruder to the cooling bath i.e. the air gap was changed to 20 mm.

The obtained hollow fiber was freeze-fractured in liquid nitrogen and its cross section was observed by a scanning electron microscope, whereupon development of a porous structure and spherulites on the surface were confirmed. In Fig. 6 is shown a scanning electron micrograph of the cross section of the obtained ETFE2 hollow fiber with 10,000 magnifications. The pore size of the porous hollow fiber of ETFE2 was distributed from 0.24 to 0.26 µm, and the average pore size was 0.25 µm. Further, the porosity of the ETFE2 porous hollow fiber was 75%.

### COMPARATIVE EXAMPLE 1

13.0 g (30 mass%) of ETFE (manufactured by Asahi Glass Company, Limited, Fluon (trademark) LM740A, melting point: 225°C, melt index: 37 (297°C), hereinafter referred to as "ETFE3") and 30.4 g (70 mass%) of anhydrous silica (manufactured by Admatechs Company Limited, Admafine SOC3 (tradename), average particle size of primary particles: 900 nm) were melt kneaded at 300°C for 10 minutes by using LABO PLASTOMILL to obtain an ETFE3 composition. The ETFE3 composition was formed by using a capillary flow tester (manufactured by Toyo Seiki Seisaku-sho, Ltd.) equipped with a hollow fiber-form capillary to obtain a formed product in the form of a hollow fiber (inner diameter: 2 mm, outer diameter: 3 mm). The obtained formed product in the form of a hollow fiber was dipped in a 15 mass% potassium hydroxide aqueous solution at 90°C to extract a part of anhydrous silica to obtain a hollow fiber. Using a tensilon with a constant-temperature bath (manufactured by ORIENTEC Co., Ltd.), the hollow fiber was preheated at 115°C for 10 minutes and then pulled in a longitudinal direction at 500 mm/min to stretch the hollow fiber 2.5 times to obtain a porous hollow fiber (inner diameter: 1.3 mm, outer diameter: 1.7 mm) of ETFE3.

The pore size of the above obtained porous hollow fiber of ETFE3 was distributed from 0.13 to 0.25 µm, and the average pore size was 0.25 µm. Further, the porosity of the porous hollow fiber was 67%.

### COMPARATIVE EXAMPLE 2

1,200 g of ETFE (manufactured by Asahi Glass Company, Limited, Fluon (trademark) C=88AX, melting point: 260°C, melt index: 3.8 (300°C), glass transition temperature: 93°C, hereinafter referred to as "ETFE4"), 1,800 g of polyvinylidene fluoride (manufactured by KUREHA CORPORATION, KF polymer T-#1100 (tradename)) as a solvent-soluble resin and 750 g of anhydrous silica (manufactured by Nippon Aerosil Co., Ltd., AEROSILOX50 (tradename), average particle size of primary particles: 40 nm) as an inorganic fine powder were melt kneaded at a forming temperature of 280°C by using a twin screw extruder to obtain pellets. Of the pellets, the mass ratio of ETFE4/polyvinylidene fluoride/anhydrous silica was 32/48/20.

The above obtained pellets were melt kneaded at a resin temperature of 280°C by using a 30 mm single screw extruder, melt extruded by an extruder for wire covering equipped with a die having an outer diameter of 2.9 mm and an inner diameter of 2.0 mm and cooled in a water bath. Then, the core was withdrawn, to obtain a hollow tubular formed product (tube) as a formed product having an outer diameter of 1.5 mm and an inner diameter of 0.9 mm. The obtained hollow tubular formed product was cut into predetermined dimensions and dipped in N,N-dimethylformamide (solvent for polyvinylidene fluoride) heated at 65°C for 10 hours to extract polyvinylidene fluoride contained in the hollow tubular formed product. Then, the obtained hollow tube was further dipped in a 15% KOH aqueous solution heated at 80°C for 2 hours to extract anhydrous silica. The hollow tube subjected to extraction was washed with water and preliminarily dried (preliminary heat treatment) at 80°C for 24 hours to obtain a porous hollow tube of ETFE4. The porous hollow tube was subjected to heat treatment at 230°C for 24 hours by using a hot air gear oven to obtain a porous hollow tube as a product. The heat treatment temperature of 230°C was selected as a temperature of at least the glass transition temperature Tg (90°C) of ETFE4 and lower than the melting point Tm (260°C). The porosity of the porous hollow fiber of ETFE4 thus obtained was 45%.

As evident from the above Examples 1 to 6 and Comparative Examples 1 and 2, by the production process of the present invention, an ETFE porous material can be easily produced within a wide range of the porosity as compared with a conventional method, and a porous material having a sharp pore diameter distribution can be produced.

### INDUSTRIAL APPLICABILITY

The porous material of an ethylene/tetrafluoroethylene copolymer having repeating units based on ethylene and repeating units based on tetrafluoroethylene of the present invention has a high porosity, has a uniform pore size, has high strength and is suitable for application to e.g. a separation membrane such as a microfiltration membrane or an ultrafiltration membrane. It has excellent chemical resistance and excellent heat resistance and has high mechanical strength and is accordingly used for e.g. water treatment such as drinking water treatment, water purification, sewage disposal or human waste treatment, membrane separation sludge treatment, waste water treatment or water disposal, or a separator of a secondary cell. Specifically, it can be used, for example, as a membrane for water treatment, a hollow fiber for separation, a hollow fiber for water treatment, or a secondary cell separator.

## Claims

1. A process for producing an ethylene/tetrafluoroethylene copolymer porous material, which comprises a step (A) of dissolving an ethylene/tetrafluoroethylene copolymer having repeating units based on ethylene and repeating units based on tetrafluoroethylene, in a solvent which can dissolve the ethylene/tetrafluoroethylene copolymer, at a temperature of at most 300°C and at least the phase separation temperature of a solution obtainable, to achieve a predetermined concentration to obtain a solution; a step (B) of forming the solution at a temperature of at most 300°C and at least the phase separation temperature of the solution to obtain a formed product; and a step (C) of cooling the product formed at a temperature of at least the phase separation temperature of the solution, to a temperature of at most the phase separation temperature of the solution to solidify the ethylene/tetrafluoroethylene copolymer, wherein the solvent is at least one member selected from the group consisting of a fluorinated aromatic compound, an aliphatic compound having at least one carbonyl group and a hydrofluoroalkyl ether.

2. The process for producing an ethylene/tetrafluoroethylene copolymer porous material according to Claim 1, wherein the dissolution in the step (A) is carried out at a temperature of at least the phase separation temperature of the solution and at most the melting point of the ethylene/tetrafluoroethylene copolymer.

3. The process for producing an ethylene/tetrafluoroethylene copolymer porous material according to Claim 1 or 2, wherein the predetermined concentration in the step (A) is from 15/85 to 65/35 by the mass ratio of the ethylene/tetrafluoroethylene copolymer to the solvent as represented by the ethylene/tetrafluoroethylene copolymer/the solvent, in the solution.

4. The process for producing an ethylene/tetrafluoroethylene copolymer porous material according to any one of Claims 1 to 3, wherein the cooling in the step (C) is carried out in a cooling liquid.

5. The process for producing an ethylene/tetrafluoroethylene copolymer porous material according to any one of Claims 1 to 4, wherein in the step (A), the solution is prepared to contain a powder having a primary particle size of from 10 nm to 1 µm.

6. The process for producing an ethylene/tetrafluoroethylene copolymer porous material according to Claim 4 or 5, wherein the step (B) is carried out by discharging the solution as an extruded product.

7. The process for producing an ethylene/tetrafluoroethylene copolymer porous material according to Claim 6, wherein the cooling in the step (C) is carried out by passing the extruded product immediately after the step (B) through a dry portion having a length of from 0.1 to 100 mm at a temperature of at least 0°C and at most the phase separation temperature of the solution, and then introducing the extruded product to the above cooling liquid.

8. The process for producing an ethylene/tetrafluoroethylene copolymer porous material according to Claim 4, 6 or 7, wherein the cooling liquid is a non-solvent for the ethylene/tetrafluoroethylene copolymer.

9. The process for producing an ethylene/tetrafluoroethylene copolymer porous material according to any one of Claims 1 to 8, which further has a step (D) of extracting the solvent.

10. The process for producing an ethylene/tetrafluoroethylene copolymer porous material according to any one of Claims 1 to 9, which is in the form of a film or a hollow fiber.

11. The process for producing an ethylene/tetrafluoroethylene copolymer porous material according to Claim 10, which has a porosity of from 20 to 90% and has an average pore size of the pores of from 0.01 to 20 µm.

## Patentansprüche

1. Verfahren zur Herstellung eines porösen Materials von Ethylen/Tetrafluorethylen-Copolymer, welches einen Schritt (A) des Lösens eines Ethylen/Tetrafluorethylen-Copolymers mit wiederkehrenden Einheiten basierend auf Ethylen und wiederkehrenden Einheiten basierend auf Tetrafluorethylen in einem Lösungsmittel, welches das Ethylen/Tetrafluorethylen-Copolymer lösen kann, bei einer Temperatur von höchstens 300°C und mindestens der Phasentrennungstemperatur einer erhältlichen Lösung, um eine vorbestimmte Konzentration zu erreichen, um eine Lösung zu erhalten; einen Schritt (B) des Bildens der Lösung bei einer Temperatur von höchstens 300°C und mindestens der Phasentrennungstemperatur der Lösung, um ein gebildetes Produkt zu erhalten, und einen Schritt (C) das Abkühlens des gebildeten Produkts bei einer Temperatur von mindestens der Phasentrennungstemperatur der Lösung auf eine Temperatur von höchstens der Phasentrennungstemperatur der Lösung, um das Ethylen/Tetrafluorethylen-Copolymer zu verfestigen, wobei das Lösungsmittel mindestens ein Mitglied, ausgewählt aus der Gruppe, bestehend aus einer fluorierten aromatischen Verbindung, einer aliphatischen Verbindung mit mindestens einer Carbonylgruppe und einem Hydrofluoralkylether, ist, umfaßt.

2. Verfahren zur Herstellung eines porösen Materials von Ethylen/Tetrafluorethylen-Copolymer gemäß Anspruch 1, wobei das Auflösen in Schritt (A) bei einer Temperatur von mindestens der Phasentrennungstemperatur der Lösung und höchstens dem Schmelzpunkt des Ethylen/Tetrafluorethylen-Copolymers durchgeführt wird.

3. Verfahren zur Herstellung eines porösen Materials von Ethylen/Tetrafluorethylen-Copolymer gemäß Anspruch 1 oder 2, wobei die vorbestimmte Konzentration in dem Schritt (A) von 15/85 bis 65/35 bezogen auf das Masseverhältnis des Ethylen/Tetrafluorethylen-Copolymers zu dem Lösungsmittel, wie durch das Ethylen/Tetrafluorethylen-Copolymer/das Lösungsmittel dargestellt, in der Lösung ist.

4. Verfahren zur Herstellung eines porösen Materials von Ethylen/Tetrafluorethylen-Copolymer gemäß einem der Ansprüche 1 bis 3, wobei das Abkühlen in dem Schritt (C) in einer Kühlungsflüssigkeit durchgeführt wird.

5. Verfahren zur Herstellung eines porösen Materials von Ethylen/Tetrafluorethylen-Copolymer gemäß einem der Ansprüche 1 bis 4, wobei in dem Schritt (A) die Lösung hergestellt wird, um ein Pulver mit einer primären Teilchengröße von 10 nm bis 1 µm zu enthalten.

6. Verfahren zur Herstellung eines porösen Materials von Ethylen/Tetrafluorethylen-Copolymer gemäß Anspruch 4 oder 5, wobei der Schritt (B) durch Austragen der Lösung als ein extrudiertes Produkt durchgeführt wird.

7. Verfahren zur Herstellung eines porösen Materials von Ethylen/Tetrafluorethylen-Copolymer gemäß Anspruch 6, wobei das Abkühlen in dem Schritt (C) durch Leiten des extrudierten Produkts unmittelbar nach dem Schritt (B) durch einen Trockenabschnitt mit einer Länge von 0,1 bis 100 mm bei einer Temperatur von mindestens 0°C und höchstens der Phasentrennungstemperatur der Lösung und anschließendes Einführen des extrudierten Produkts in die vorgenannte Kühlungsflüssigkeit durchgeführt wird.

8. Verfahren zur Herstellung eines porösen Materials von Ethylen/Tetrafluorethylen-Copolymer gemäß Anspruch 4, 6 oder 7, wobei die Kühlungsflüssigkeit ein Nicht-Lösungsmittel für das Ethylen/Tetrafluorethylen-Copolymer ist.

9. Verfahren zur Herstellung eines porösen Materials von Ethylen/Tetrafluorethylen-Copolymer gemäß einem der Ansprüche 1 bis 8, welches weiter einen Schritt (D) des Extrahieren des Lösungsmittels aufweist.

10. Verfahren zur Herstellung eines porösen Materials von Ethylen/Tetrafluorethylen-Copolymer gemäß einem der Ansprüche 1 bis 9, welches in der Form einer Folie oder einer Hohlfaser ist.

11. Verfahren zur Herstellung eines porösen Materials von Ethylen/Tetrafluorethylen-Copolymer gemäß Anspruch 10, welches eine Porosität von 20 bis 90% aufweist und eine durchschnittliche Porengröße der Poren von 0,01 bis 20 µm aufweist.

## Revendications

1. Procédé pour produire un matériau poreux en copolymère d'éthylène/tétrafluoroéthylène, qui comprend une étape (A) de dissolution d'un copolymère d'éthylène/tétrafluoroéthylène présentant des motifs répétitifs à base d'éthylène et des motifs répétitifs à base de tétrafluoroéthylène, dans un solvant qui peut dissoudre le copolymère d'éthylène/tétrafluoroéthylène, à une température d'au plus 300°C et d'au moins la température de séparation de phases d'une solution pouvant être obtenue, pour atteindre une concentration prédéterminée afin d'obtenir une solution ; une étape (B) de formation de la solution à une température d'au plus 300°C et d'au moins la température de séparation de phases de la solution pour obtenir un produit formé ; et une étape (C) de refroidissement du produit formé à une température d'au moins la température de séparation de phases de la solution, jusqu'à une température d'au plus la température de séparation de phases de la solution afin de solidifier le copolymère d'éthylène/tétrafluoroéthylène, dans lequel le solvant est au moins un membre choisi dans l'ensemble constitué par un composé aromatique fluoré, un composé aliphatique comportant au moins un groupe carbonyle et un hydrofluoroalkyléther.

2. Procédé pour produire un matériau poreux en copolymère d'éthylène/tétrafluoroéthylène selon la revendication 1, dans lequel la dissolution lors de l'étape (A) est effectuée à une température d'au moins la température de séparation de phases de la solution et d'au plus le point de fusion du copolymère d'éthylène/tétrafluoroéthylène.

3. Procédé pour produire un matériau poreux en copolymère d'éthylène/tétrafluoroéthylène selon la revendication 1 ou 2, dans lequel la concentration prédéterminée lors de l'étape (A) correspond à un rapport en masse du copolymère d'éthylène/tétrafluoroéthylène sur le solvant, représenté par le rapport copolymère d'éthylène/tétrafluoroéthylène / solvant, dans la solution, de 15/85 à 65/35.

4. Procédé pour produire un matériau poreux en copolymère d'éthylène/tétrafluoroéthylène selon l'une quelconque des revendications 1 à 3, dans lequel le refroidissement lors de l'étape (C) est effectué dans un liquide de refroidissement.

5. Procédé pour produire un matériau poreux en copolymère d'éthylène/tétrafluoroéthylène selon l'une quelconque des revendications 1 à 4, dans lequel, lors de l'étape (A), la solution est préparée de façon à contenir une poudre présentant une granulométrie primaire de 10 nm à 1 µm.

6. Procédé pour produire un matériau poreux en copolymère d'éthylène/tétrafluoroéthylène selon la revendication 4 ou 5, dans lequel l'étape (B) est effectuée par décharge de la solution sous la forme d'un produit extrudé.

7. Procédé pour produire un matériau poreux en copolymère d'éthylène/tétrafluoroéthylène selon la revendication 6, dans lequel le refroidissement lors de l'étape (C) est effectué par passage du produit extrudé, immédiatement après l'étape (B), dans une portion sèche présentant une longueur de 0,1 à 100 mm à une température d'au moins 0°C et d'au plus la température de séparation de phases de la solution, et ensuite introduction du produit extrudé dans le liquide de refroidissement ci-dessus.

8. Procédé pour produire un matériau poreux en copolymère d'éthylène/tétrafluoroéthylène selon la revendication 4, 6 ou 7, dans lequel le liquide de refroidissement est un non-solvant pour le copolymère d'éthylène/tétrafluoroéthylène.

9. Procédé pour produire un matériau poreux en copolymère d'éthylène/tétrafluoroéthylène selon l'une quelconque des revendications 1 à 8, qui comporte en outre une étape (D) d'extraction du solvant.

10. Procédé pour produire un matériau poreux en copolymère d'éthylène/tétrafluoroéthylène selon l'une quelconque des revendications 1 à 9, dans lequel le matériau est sous la forme d'un film ou d'une fibre creuse.

11. Procédé pour produire un matériau poreux en copolymère d'éthylène/tétrafluoroéthylène selon la revendication 10, dans lequel le matériau présente une porosité de 20 à 90 % et une taille de pores moyenne de 0,01 à 20 µm.
